# EUROPÄISCHE PATENTSCHRIFT

(11) **EP 0 944 681 B1**
(45) Veröffentlichungstag und Bekanntmachung des Hinweises auf die Patenterteilung: **10.04.2002**
(21) Anmeldenummer: 97952051.7
(22) Anmeldetag: 11.12.1997
(51) Int. Cl.: C09D 183/06, C09D 183/14

(54) **STRAHLUNGSHÄRTENDE ZUSAMMENSETZUNGEN**
RADIATION-HARDENING COMPOSITIONS
COMPOSITIONS A DURCISSEMENT AUX RADIATIONS

(30) Priorität: 16.12.1996 DE 19652304; 15.05.1997 DE 19720472
(43) Veröffentlichungstag der Anmeldung: 29.09.1999
(60) Teilanmeldung: 00100198.1
(73) Patentinhaber: Wacker-Chemie GmbH, 81737 München (DE)
(72) Erfinder: DAUTH, Jochen, D-84489 Burghausen (DE); HERZIG, Christian, D-83329 Waging am See (DE); WOLFERSEDER, Josef, D-84367 Tann (DE); ZOELLNER, Oliver, D-84359 Simbach am Inn (DE)
(74) Vertreter: Fritz, Helmut, Dr.
(86) Internationale Anmeldenummer: EP9706922
(87) Internationale Veröffentlichungsnummer: WO9827174

(56) Entgegenhaltungen:
- EP-A- 0 424 960
- EP-A- 0 503 668
- EP-A- 0 508 491
- DE-A- 4 325 359
- DE-A- 4 443 749

## Beschreibung

Die Erfindung betrifft strahlungshärtende Zusammensetzungen enthaltend
(A) (Meth)acryloxygruppen aufweisende Organopolysiloxane und
(B) Photosensibilisatoren,
und deren Verwendung zur Herstellung von klebrige Stoffe abweisenden Überzügen.

In EP-A 624 627 (Shin-Etsu Chemical Co.,Ltd; offengelegt am 17. November 1994) sind strahlungshärtende Organopolysiloxanmischungen, die ω-(Meth)acryloxyalkylgruppen enthalten, beschrieben. Die in den Mischungen enthaltenen Organopolysiloxane sind verzweigt, wobei die Verzweigungsstellen trifunktionelle Monoorganosiloxygruppen, sogenannte T-Einheiten, darstellen.

Aus US-A 5,034,491 (Th. Goldschmidt; ausgegeben am 23. Juli 1991) sind (Meth)acrylsäureestermodifizierte Organopolysiloxanegemische zur Herstellung von abhäsiven Beschichtungsmassen beschrieben, wobei zwei Organopolysiloxane mit unterschiedlicher Kettenlänge in verschiedenen Gewichtsverhältnissen gemischt werden.

In WO95/26266 (Mobil Oil Corporation; veröffentlicht am 5. Oktober 1995) sind abhäsive Beschichtungsmassen beschrieben, die als Zusatz monomere oder oligomere organische Acrylatester enthalten.

Aus DE-A 44 43 749 (Wacker Chemie GmbH; offengelegt am 13. Juni 1996) sind (Meth)acryloxygruppen aufweisende Organopolysiloxane bekannt.

Es bestand die Aufgabe, neue Zusammensetzungen auf Grundlage von (Meth)acryloxygruppen aufweisenden Organopolysiloxanen bereitzustellen, die durch Bestrahlung, vorzugsweise mit Licht, radikalisch vernetzen. Ferner bestand die Aufgabe, neue Zusammensetzungen für die Herstellung von klebrige Stoffe abweisenden Überzügen bereitzustellen. Des weiteren bestand die Aufgabe, abhäsive Beschichtungszusammensetzungen bereitzustellen, die abriebfeste Überzüge ergeben, d.h. auf dem Untergrund haften, so daß sie durch mechanische Einflüße, wie z.B. durch Reiben, nicht vom Untergrund getrennt werden können, damit sie beim Abziehen darauf befindlicher, mit Klebstoff versehener Träger, wie z.B. Etiketten, nicht teilweise abgelöst werden und so die Klebkraft der Etiketten vermindern. Weiterhin bestand die Aufgabe, abhäsive Beschichtungszusammensetzungen bereitzustellen, die klebfreie, gut ausgehärtete Überzüge ergeben. Die Aufgabe wird durch die Erfindung gelöst.

Gegenstand der Erfindung sind strahlungshärtende Zusammensetzungen enthaltend
(A) (Meth)acryloxygruppen aufweisende lineare Organopolysiloxane der allgemeinen Formel

   R¹ ₐR₃₋ₐSiO(R₂SiO)_{c}[R₂Si-Y-SiR₂O(R₂SiO)_{c}]_{d}SiR_{3-b}R¹ _{b} (I)

   wobei R gleich oder verschieden sein kann, einen einwertigen, gegebenenfalls substituierten Kohlenwasserstoffrest mit 1 bis 18 Kohlenstoffatomen je Rest, der frei von endständigen aliphatischen Kohlenstoff-Kohlenstoff-Mehrfachbindungen ist, bedeutet,
   R¹ ein Rest der Formel 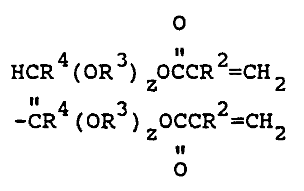 ist, wobei z eine ganze Zahl im Wert von 1 bis 10,
   R² ein Wasserstoffatom oder einen Methylrest,
   R³ einen linearen oder verzweigten Alkylenrest mit 1 bis 6 Kohlenstoffatom(en) je Rest und
   R⁴ einen linearen oder verzweigten Alkylenrest mit 1 bis 6 Kohlenstoffatom(en) je Rest bedeutet,
   Y einen zweiwertigen organischen Rest, der frei von endständigen aliphatischen Kohlenstoff-Kohlenstoff-Mehrfachbindungen ist, bedeutet,
   a 0 oder 1 ist,
   b 0 oder 1 ist,
   mit der Maßgabe, daß die Summe a+b je Molekül 1 oder 2, durchschnittlich 1,3 bis 1,9 ist,
   c eine ganze Zahl im Wert von 1 bis 1000 ist und
   d 0 oder eine ganze Zahl im Wert von 1 bis 10 ist, und
(B) Photosensibilisatoren.

Gegenstand der Erfindung ist weiterhin ein Verfahren zur Herstellung von klebrige Stoffe abweisenden Überzügen durch Auftragen von vernetzbaren Zusammensetzungen enthaltend
(A) (Meth)acryloxygruppen aufweisende lineare Organopolysiloxane der allgemeinen Formel

   R¹ ₐR₃₋ₐSiO(R₂SiO)_{c}[R₂Si-Y-SiR₂O(R₂SiO)_{c}]_{d}SiR_{3-b}R¹ _{b} (I)

   wobei R, R¹, Y, a, b, c und d die oben dafür angegebene Bedeutung haben,
   mit der Maßgabe, daß die Summe a+b je Molekül 1 oder 2, durchschnittlich 1,3 bis 1,9 ist,
   und
(B) Photosensibilisatoren
auf die klebrige Stoffe abweisend zu machenden Oberflächen und anschließende Härtung der vernetzbaren Zusammensetzung durch Bestrahlung.

Gegenstand der Erfindung sind weiterhin (Meth)acryloxygruppen aufweisende lineare Organopolysiloxane der allgemeinen Formel

R¹ ₐR₃₋ₐSiO(R₂SiO)_{c}[R₂Si-Y-SiR₂O(R₂SiO)_{c}]_{d}SiR_{3-b}R¹ _{b} (I)

wobei R, R¹, Y, a, b, c und d die oben dafür angegebene Bedeutung haben,
mit der Maßgabe, daß die Summe a+b je Molekül 1 oder 2, durchschnittlich 1,3 bis 1,9 ist.

Die erfindungsgemäßen Organopolysiloxane (A) besitzen vorzugsweise eine Viskosität von 20 bis 20 000 mm²/s bei 25°C, bevorzugt 20 bis 1 000 mm²/s bei 25°C, besonders bevorzugt 20 bis 500 mm²/s bei 25°C.

Die erfindungsgemäßen Organopolysiloxane weisen vorzugsweise Jodzahlen zwischen 1 und 60, bevorzugt 4 und 40, auf, wobei die Jodzahl die bei der Addition an die Doppelbindung verbrauchte Jodmenge in Gramm pro 100 Gramm eingesetztes, erfindungsgemäßes Organopolysiloxan angibt.

Beispiele für den Rest R sind jeweils Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl- und der tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentyl- und der 2-Ethylhexylrest, Nonylreste, wie der n-Nonylrest, Decylreste, wie der n-Decylrest, Dodecylreste, wie der n-Dodecylrest, Tetradecylreste, wie der n-Tetradecylrest, Hexadecylreste, wie der n-Hexadecylrest und Octadecylreste, wie der n-Octadecylrest, Cycloalkylreste, wie Cyclopentyl-, Cyclohexyl- und 4-Ethylcyclohexylrest, Cycloheptylreste, Norbornylreste und Methylcyclohexylreste, Arylreste, wie der Phenyl-, Biphenyl-, Naphthyl- und Anthryl- und Phenanthrylrest; Alkarylreste, wie o-, m-, p-Tolylreste, Xylylreste und Ethylphenylreste; Aralkylreste, wie der Benzylrest, sowie der α- und der β-Phenylethylrest. Bei dem Rest R handelt es sich bevorzugt um den Methylrest.

Beispiele für substituierte Reste R sind Halogenalkylreste, wie der 3,3,3-Trifluor-n-propylrest, der 2,2,2,2',2',2'-Hexafluor- isopropylrest und der Heptafluorisopropylrest, Halogenarylreste, wie der o-, m-, und p-Chlorphenylrest, Alkylreste, die durch ein Ethersauerstoffatom substituiert sind, wie der 2-Methoxyethyl- und der 2-Ethoxyethylrest.

Bevorzugt ist der Rest R² ein Wasserstoffatom.

Beispiele für Reste R³ sind Alkylenreste der Formel -CH₂-CH₂-, -CH₂-CH₂-CH₂-, -C(CH₃)HCH₂- und -(CH₂)₄-. Bevorzugt ist R³ ein Rest der Formel -CH₂-CH₂-.

Beispiele für Alkylenreste R⁴ sind solche der Formel -CH₂-, -CH(CH₃)-, -C(CH₃)₂-, -C(CH₃)(C₂H₅)-, -(CH₂)₂- und -(CH₂)₄-, wobei der Rest der Formel -CH₂- bevorzugt ist.

Beispiele für Reste R¹ sind solche der Formel 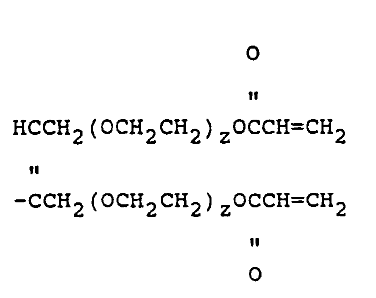 und 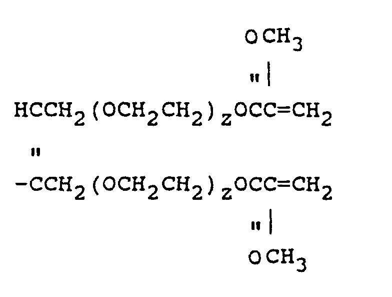 wobei z die oben dafür angegebene Bedeutung hat, bevorzugt eine ganze Zahl im Wert von 2 bis 8 ist.

Vorzugsweise ist Y ein zweiwertiger Kohlenwasserstoffrest, der durch ein oder mehrere Sauerstoffatome unterbrochen sein kann. Beispiele für Reste Y sind solche der Formel -CH₂CH₂-, -CH(CH₃)-, -(CH₂)₄-, -(CH₂)₅-, -(CH₂)₆-, -(CH₂)₈-, -(CH₂)₁₀-, -(CH₂)₁₂-, -(CH₂)₃O(CH₂)₃-, 1,3-(CH₂CH₂)₂(C₆H₄), 1,4-(CH₂CH₂)₂(C₆H₄), 1,3-(CH₂CHCH₃)₂(C₆H₄) und 1,4-(CH₂CHCH₃)₂(C₆H₄), wobei die Reste der Formel -CH₂CH₂-, -CH(CH₃)-, -(CH₂)₆-, -(CH₂)₈-, 1,3-(CH₂CH₂)₂(C₆H₄), 1,4-(CH₂CH₂)₂(C₆H₄), 1,3-(CH₂CHCH₃)₂(C₆H₄) und 1,4-(CH₂CHCH₃)₂(C₆H₄) bevorzugt sind und der Rest der Formel -CH₂CH₂- besonders bevorzugt ist.

Bevorzugt ist die Summe a+b durchschnittlich 1,4 bis 1,9.

Die Organopolysiloxane (A) weisen als Endgruppen durchschnittlich 65 bis 95 Mol-% Reste R¹ (bzw. 35 bis 5 Mol-% Reste R, bevorzugt Methylendgruppen) auf, was einer durchschnittlichen Summe a+b von 1,3 bis 1,9 entspricht. Bei den erfindungsgemäßen Zusammensetzungen wird vorzugsweise ein Gemisch von verschiedenen Organopolysiloxanen (A) eingesetzt.

Vorzugsweise ist c eine ganze Zahl im Wert von 10 bis 300, bevorzugt 15 bis 150.

Vorzugsweise ist d 0 oder eine ganze Zahl im Wert von 1 bis 3, bevorzugt ist d 0.

Bevorzugt werden die erfindungsgemäßen (Meth)acryloxygruppen aufweisenden linearen Organopolysiloxanen hergestellt, indem alkoxylierte Alk-2-in-di(meth)acrylate-1,4 (1) der allgemeinen Formel 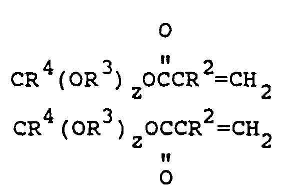 wobei R², R³, R⁴ und z die oben dafür angegebene Bedeutung haben,
mit Si-gebundene Wasserstoffatome aufweisenden Organopolysiloxanen (2) der allgemeinen Formel

HₐR₃₋ₐSiO(R₂SiO)_{c}[R₂Si-Y-SiR₂O(R₂SiO)_{c}]_{d}SiR_{3-b}H_{b} (II)

wobei R, Y, a, b, c und d die oben dafür angegebene Bedeutung haben,
in Gegenwart von die Anlagerung von Si-gebundenen Wasserstoff an aliphatische Mehrfachbindung fördernde Katalysatoren (3) sowie in Gegenwart von Polymerisationsinhibitoren (4) umgesetzt werden,
mit der Maßgabe, daß alkoxylierte
Alk-2-in-di(meth)acrylate-1,4 (1) in Mengen von 1,01 bis 1,5 Mol, bevorzugt 1,01 bis 1,2 Mol, je Grammatom Si-gebundener Wasserstoff in Organopolysiloxanen (2) eingesetzt werden.

Alkoxylierte Alk-2-in-di(meth)acrylate-1,4 (1) sind nach allgemeinen Verfahren aus dem Stand der Technik herstellbar: Dabei wird das alkoxylierte Alk-in-diol, z.B. das ethoxylierte But-2-in-diol-1,4, mit Acrylsäure unter saurer Katalyse verestert. Das Reaktionswasser wird azeotrop entfernt.

Die Anlagerung von Si-gebundenen Wasserstoff an aliphatische Mehrfachbindung fördernde Katalysatoren (3), sogenannte Hydrosilylierungskatalysatoren, sind dem Fachmann bekannt und Beispiele hierfür sowie die eingesetzten Mengen an Katalysatoren sind in der DE-A 44 43 749 beschrieben.

Als Polymerisationsinhibitor (4) werden vorzugsweise phenolische Stabilisatoren wie Kresol- bzw. Hydrochinonderivate, z.B. Bis-(tert. butyl)-kresol, 2,5-Di-tert. butyl-hydrochinon oder der Monomethylether des Hydrochinons oder Phenothiazin in einer Konzentration von 0,001 bis 1 Gew.-%, bevorzugt von 0,002 bis 0,5 Gew.-%, bezogen auf das Gesamtgewicht von alkoxyliertem Alkindiacrylat (1) und Organopolysiloxan (2), eingesetzt.

Bevorzugt sind (Meth)acryloxygruppen aufweisende Organopolysiloxane der Formel (I) mit d gleich 0. Bevorzugt werden bei der Herstellung dieser Organopolysiloxane der Formel (I) mit d gleich 0 Si-gebundene Wasserstoffatome aufweisende Organopolysiloxane der Formel (II) mit d gleich 0 eingesetzt. Ein bevorzugtes Verfahren zur Herstellung der Organopolysiloxane der Formel (II) mit d gleich 0 ist die durch Säuren katalysierte Equilibrierung von Polydialkylsiloxanen mit Alkylendgruppen mit Polydialkylsiloxanen mit endständigen Si-gebundenen Wasserstoffatomen.

Vorzugsweise werden die erfindungsgemäßen (Meth)acryloxygruppen aufweisenden Organopolysiloxane durch Licht, bevorzugt durch Ultraviolettlicht, vernetzt, wobei solches mit Wellenlängen im Bereich von 200 bis 400 nm bevorzugt ist. Das Ultraviolettlicht kann, z.B. in Xenon-, Quecksilbernieder-, Quecksilbermittel-, Quecksilberhochdrucklampen oder Eximerlampen, erzeugt werden. Zur Vernetzung durch Licht ist auch solches mit einer Wellenlänge von 400 bis 600 nm, also sogenanntes "Halogenlicht", geeignet.

Bei den zur Vernetzung der erfindungsgemäßen Organopolysiloxanen geeigneten Energiequellen kann es sich aber auch um Röntgen-, Gamma- oder Elektronenstrahlen oder um gleichzeitige Anwendung von mindestens zwei verschiedenen Arten solcher Strahlen handeln. Zusätzlich zu der energiereichen Strahlung kann Wärmezufuhr, einschließlich Wärmezufuhr mittels Infrarotlicht, angewendet werden. Eine solche Wärmezufuhr ist jedoch keineswegs erforderlich und vorzugsweise unterbleibt sie, um den Aufwand für Energie zu verringern.

Geeignete Photosensibilisatoren (B) sind gegebenenfalls substituierte Acetophenone, Propiophenone, Benzophenone, Anthrachinone, Benzile, Carbazole, Xanthone, Thioxanthone, Fluorene, Fluorenone, Benzoine, Naphtalinsulfonsäuren, Benzaldehyde und Zimtsäuren.

Beispiele für Photosensibilisatoren (B) sind Fluorenon, Fluoren, Carbazol; Acetophenon; substituierte Acetophenone, wie 3-Methylacetophenon, 2,2'-Dimethoxy-2-phenylacetophenon, 4-Methylacetophenon, 3-Bromacetophenon, 4-Allylacetophenon, p-Diacetylbenzol, p-tert.-Butyltrichloracetophenon; Propiophenon; substituierte Propiophenone, wie
1-[4-(Methylthio)phenyl]-2-morpholinylpropanon-1, Benzophenon; substituierte Benzophenone, wie Michlers Keton, 3-Methoxybenzophenon, 4,4'-Dimethylaminobenzophenon, 4-Methylbenzophenon, 4-Chlorbenzophenon, 4,4'-Dimethoxybenzophenon, 4-Chlor-4'-benzylbenzophenon; Xanthon; substituierte Xanthone, wie 3-Chlorxanthon, 3,9-Dichlorxanthon, 3-Chlor-8-nonylxanthon; Thioxanthon; substituierte Thioxanthone, wie Isopropylthioxanthon; Anthrachinon; substituierte Anthrachinone, wie Chloranthrachinon und Anthrachinon-1,5-disulfonsäuredinatriumsalz; Benzoin; substituierte Benzoine, wie Benzoinmethylether; Benzil; 2-Naphtalinsulfonylchlorid; Benzaldehyd; Zimtsäure; und Oligo[2-hydroxy-2-methyl-1-(4-(1-methylvinyl)phenyl)propanon].

Photosensibilisatoren (B) werden in den erfindungsgemäßen Zusammensetzungen in Mengen von vorzugsweise 0,01 bis 10 Gew.-%, bevorzugt 0,5 bis 5 Gewichtsprozent, jeweils bezogen auf das Gesamtgewicht der zu vernetzenden Organopolysiloxane (A), eingesetzt.

Bevorzugt wird als Photosensibilisator (B)
Oligo[2-hydroxy-2-methyl-1-(4(1-methylvinyl)phenyl)propanon], käuflich erwerblich unter dem Handelsnamen "ESACURE-KIP 150" bei der Fa. Lamberti, verwendet. Der oligomere Photosensibilisator wird dabei bevorzugt in einem kurzkettigen Organopolysiloxan gelöst.

Die erfindungsgemäßen Zusammensetzungen können Polymerisationsinhibitoren enthalten. Aus Gründen der besseren Handhabung ist es bevorzugt, die erfindungsgemäßen Zusammensetzungen mit geringen Mengen Inhibitoren (C) zu versetzen, um beispielsweise vorzeitige Vernetzung einer verwendungsfähigen Formulierung während deren Lagerung zu verhindern. Beispiele für gegebenenfalls eingesetzte Inhibitoren sind alle gebräuchlichen auch bisher in radikalisch ablaufenden Prozessen eingesetzten Inhibitoren, wie Hydrochinon, 4-Methoxyphenol,
2,6-Ditert.butyl-4-methylphenol oder Phenothiazin. Vorzugsweise werden Inhibitoren in Mengen von 10 bis 10.000 ppm, besonders bevorzugt 50 bis 1.000 ppm, jeweils bezogen auf das Gesamtgewicht der zu vernetzenden Organopolysiloxane (A), eingesetzt.

Gegebenenfalls können zusätzlich monomere oder oligomere, organische (Meth)acrylatester oder deren Gemische in einer Menge von vorzugsweise 0.1 bis 10 Gewichtsprozent, bezogen auf das Gesamtgewicht der zu vernetzenden Organopolysiloxane (A), zugegeben werden, wobei dies nicht bevorzugt ist.

Beispiele für Oberflächen, auf welche die erfindungsgemäßen Überzüge aufgebracht werden können, sind diejenigen von Papier, Holz, Kork, Kunststoffolien, z.B. Polyethylenfolien oder Polypropylenfolien, keramischen Gegenständen, Glas, einschließlich Glasfasern, Metallen, Pappen, einschließlich solcher aus Asbest, und von gewebtem und ungewebtem Tuch aus natürlichen oder synthetischen organischen Fasern. Anwendung finden die erfindungsgemäßen Überzüge beispielsweise in der Trennpapierbeschichtung.

Das Auftragen der erfindungsgemäßen durch Bestrahlung mit Licht vernetzbaren Zusammensetzungen auf die zu überziehenden Oberflächen kann in beliebiger, für die Herstellung von Überzügen aus flüssigen Stoffen geeigneter und vielfach bekannter Weise erfolgen, beispielsweise durch Tauchen, Streichen, Gießen, Sprühen, Aufwalzen, Drucken, z.B. mittels einer Offsetgravurüberzugsvorrichtung, Messer- oder Rakelbeschichtung.

Die erfindungsgemäßen strahlungshärtenden Beschichtungen haben den Vorteil, daß gegenüber vielen klebrigen Stoffen kein Zippy-Release auftritt. Desweiteren besteht der Vorteil, daß die erfindungsgemäßen Zusammensetzungen niedrige Viskositäten besitzen und auch unter hoher Friktion keine misting-Probleme verursachen. Die erfindungsgemäßen Zusammensetzungen zeigen auf vielen Substraten einen guten Verlauf. Weiterhin besteht der Vorteil, daß durch die gezielt einstellbaren Funktionsdichten verschiedene Trennkraftabstufungen einstellbar sind und die Zusammensetzungen gut miteinander abmischbar sind.

### Herstellung der Organopolysiloxane (A):

a) 80 g eines α,ω-Dihydrogendimethylpolysiloxanes (Gehalt an Si-gebundenen Wasserstoff: 0.346 Gew.-%) mit einer Viskosität von 3.7 mm²/s bei 25°C und 432.9 g eines methylterminierten Polydimethylsiloxanes einer mittleren Kettenlänge von ca. 390 Siloxyeinheiten und einer Viskosität von 5000 mm²/s bei 25°C werden unter PNCl₂-Katalyse (40 ppm) bei 140°C unter Stickstoff und Rühren zwei Stunden equilibiert. Nach dem Abkühlen auf 70°C wird die Reaktionsmischung mit 5.2 g Magnesiumoxid versetzt und schließlich auf Raumtemperatur unter Rühren gebracht. Das Produkt wird nach der Filtration bei 120°C im Hochvakuum (1 mbar) über vierzig Minuten bis zur Gewichtskonstanz ausgeheizt. Man erhält 474.5 g (92.5 % d. Th.) eines klaren, farblosen Öles mit einer Viskosität von 69 mm²/s bei 25°C und einem Gehalt an Si-gebundenem Wasserstoff von 0.044 Gew.-% (VSI). Das Polymer enthält durchschnittlich 88 Mol.-% Hydrogendimethylsiloxygruppen.
   20 g VSI, 4.04 g eines ethoxylierten Butindioldiacrylates mit einem Molekulargewicht von ca. 440 g/mol (9.2 mmol C=C), 300 ppm Hydrochinonmonomethylether bezogen auf Diacrylateinwaage und 16 g Toluol werden unter Rühren auf 120°C temperiert. Danach werden 48.1 mg einer 1 Gew.-%igen (bezogen auf elementares Platin) toluolischen Lösung eines Tris(divinyltetramethyldisiloxan)diplatinkomplexes zugegeben und die Reaktionsmischung zwanzig Minuten bei 120°C gerührt. Nach der Filtration wird das Produkt fünfzehn Minuten bei 100°C im Hochvakuum (1 mbar) bis zur Gewichtskonstanz ausgeheizt. Man erhält 23.6 g (98 % d. Th.) eines klaren, gelben Öles mit einer Viskosität von 290 mm²/s bei 25°C und einer Jodzahl von 18.7 g Jod pro 100 g Öl.
b) 50 g eines α,ω-Dihydrogendimethylpolysiloxanes (Gehalt an Si-gebundenen Wasserstoff: 0.346 Gew.-%) mit einer Viskosität von 3.7 mm²/s bei 25°C und 429.3 g eines methylterminierten Polydimethylsiloxanes einer mittleren Kettenlänge von ca. 390 Siloxyeinheiten und einer Viskosität von 5000 mm²/s bei 25°C werden unter PNCl₂-Katalyse (40 ppm) bei 140°C unter Stickstoff und Rühren zwei Stunden equilibiert. Nach dem Abkühlen auf 70°C wird die Reaktionsmischung mit 4.8 g Magnesiumoxid versetzt und schließlich auf Raumtemperatur unter Rühren gebracht. Das Produkt wird nach der Filtration bei 120°C im Hochvakuum (1 mbar) über vierzig Minuten bis zur Gewichtskonstanz ausgeheizt. Man erhält 451.5 g (94.2 % d. Th.) eines klaren, farblosen Öles mit einer Viskosität von 179 mm²/s bei 25°C und einem Gehalt an Si-gebundenem Wasserstoff von 0.028 Gew.-% (VSII). Das Polymer enthält durchschnittlich 82 Mol.-% Hydrogendimethylsiloxygruppen.
   20 g VSII, 2.57 g eines ethoxylierten Butindioldiacrylates mit einem Molekulargewicht von ca. 440 g/mol (5.9 mmol C=C), 300 ppm Hydrochinonmonomethylether bezogen auf Diacrylateinwaage und 10 g Toluol werden unter Rühren auf 120°C temperiert. Danach werden 45.1 mg einer 1 Gew.-%igen (bezogen auf elementares Platin) toluolischen Lösung eines Tris(divinyltetramethyldisiloxan)diplatinkomplexes zugegeben und die Reaktionsmischung zwanzig Minuten bei 120°C gerührt. Nach der Filtration wird das Produkt fünfzehn Minuten bei 100°C im Hochvakuum (1 mbar) bis zur Gewichtskonstanz ausgeheizt. Man erhält 21.8 g (97 % d. Th.) eines klaren, gelben Öles mit einer Viskosität von 520 mm²/s bei 25°C und einer Jodzahl von 12.5 g Jod pro 100 g Öl.
c) 400 g eines α,ω-Dihydrogendimethylpolysiloxanes (Gehalt an Si-gebundenen Wasserstoff: 0.049 Gew.-%) mit einer Viskosität von 53 mm²/s bei 25°C und 100 g eines methylterminierten Polydimethylsiloxanes einer mittleren Kettenlänge von ca. 120 Siloxyeinheiten und einer Viskosität von 250 mm²/s bei 25°C werden unter PNCl₂-Katalyse (40 ppm) bei 140°C unter Stickstoff und Rühren zwei Stunden equilibiert. Nach dem Abkühlen auf 70°C wird die Reaktionsmischung mit 5 g Magnesiumoxid versetzt und schließlich auf Raumtemperatur unter Rühren gebracht. Das Produkt wird nach der Filtration bei 120°C im Hochvakuum (1 mbar) über vierzig Minuten bis zur Gewichtskonstanz ausgeheizt. Man erhält 420 g (84 % d. Th.) eines klaren, farblosen Öles mit einer Viskosität von 73 mm²/s bei 25°C und einem Gehalt an Si-gebundenem Wasserstoff von 0.046 Gew.-% (VSIII). Das Polymer enthält durchschnittlich 86 Mol.-% Hydrogendimethylsiloxygruppen.
   20 g VSIII, 4.19 g eines ethoxylierten Butindioldiacrylates mit einem Molekulargewicht von ca. 440 g/mol (9.6 mmol C=C), 300 ppm Hydrochinonmonomethylether bezogen auf Diacrylateinwaage und 16.8 g Toluol werden unter Rühren auf 120°C temperiert. Danach werden 52.3 mg einer 1 Gew.-%igen (bezogen auf elementares Platin) toluolischen Lösung eines Tris(divinyltetramethyldisiloxan)diplatinkomplexes zugegeben und die Reaktionsmischung zwanzig Minuten bei 120°C gerührt. Nach der Filtration wird das Produkt fünfzehn Minuten bei 100°C im Hochvakuum (1 mbar) bis zur Gewichtskonstanz ausgeheizt. Man erhält 22.3 g (92 % d. Th.) eines klaren, gelben Öles mit einer Viskosität von 336 mm²/s bei 25°C und einer Jodzahl von 19.4 g Jod pro 100 g Öl.
d) 13,5 g eines α,ω-Dihydrogendimethylpolysiloxanes (Gehalt an Si-gebundenem Wasserstoff: 0,310 Gew.-%) mit einer Viskosität von 3.7 mm²/s bei 25°C und 86,5 g eines methylterminierten Polydimethylsiloxanes einer mittleren Kettenlänge von ca. 103 Siloxyeinheiten und einer Viskosität von 200 mm²/s bei 25°C werden unter PNCl₂-Katalyse (40 ppm) bei 140°C unter Stickstoff und Rühren zwei Stunden equilibriert. Nach dem Abkühlen auf 70°C wird die Reaktionsmischung mit 1,0 g Magnesiumoxid versetzt und schließlich auf Raumtemperatur unter Rühren gebracht. Das Produkt wird nach der Filtration bei 120°C im Hochvakuum (1 mbar) über vierzig Minuten bis zur Gewichtskonstanz ausgeheizt. Man erhält 91,7 g (91,7% d.Th.) eines klaren, farblosen Öles mit einer Viskosität von 37 mm²/s bei 25°C und einem Gehalt an Si-gebundenem Wasserstoff von 0,042 Gew.-% (VSV). Das Polymer enthält durchschnittlich
   65 Mol.-% Hydrogendimethylsiloxygruppen.
   20 g VSV, 3,88 g eines ethoxylierten Butindioldiacrylates mit einem Molekulargewicht von ca. 440 g/mol (8,8 mmol C=C), 300 ppm Hydrochinonmonomethylether, bezogen auf Diacrylateinwaage, und 7,76 g Toluol werden unter Rühren auf 120°C temperiert. Danach werden 47,8 mg einer 1 Gew.-%-igen (bezogen auf elementares Platin) toluolischen Lösung eines Tris(divinyltetramethyldisiloxan)diplatinkomplexes zugegeben und die Reaktionsmischung zwanzig Minuten bei 120°C gerührt. Nach der Filtration wird das Produkt fünfzehn Minuten bei 100°C im Hochvakuum (1 mbar) bis zur Gewichtskonzstanz ausgeheizt. Man erhält 22,9 g (95,8% d.Th.) eines klaren, gelben Öles mit einer Viskosität von 103 mm²/s bei 25°C und einer Jodzahl von 18,7 g Jod pro 100g Öl.
e) 29,8 g eines α,ω-Dihydrogendimethylpolysiloxanes (Gehalt an Si-gebundenem Wasserstoff: 0,310 Gew.-%) mit einer Viskosität von 3,7 mm²/s bei 25°C und 70,2 g eines methylterminierten Polydimethylsiloxanes einer mittleren Kettenlänge von ca. 390 Siloxyeinheiten und einer Viskosität von 5000 mm²/s bei 25°C werden unter PNCl₂-Katalyse (40 ppm) bei 140°C unter Stickstoff und Rühren zwei Stunden equilibriert. Nach dem Abkühlen auf 70°C wird die Reaktionsmischung mit 1,0 g Magnesiumoxid versetzt und schließlich auf Raumtemperatur unter Rühren gebracht. Das Produkt wird nach der Filtration bei 120°C im Hochvakuum (1 mbar) über vierzig Minuten bis zur Gewichtskonstanz ausgeheizt. Man erhält 93,8 g (93,8 % d.Th.) eines klaren, farblosen Öles mit einer Viskosität von 22,3 mm²/s bei 25°C und einem Gehalt an Si-gebundenem Wasserstoff von 0,092 Gew.-% (VSVI). Das Polymer enthält durchschnittlich
   95 Mol.-% Hydrogendimethylsiloxygruppen.
   20 g VSVI, 8,10 g eines ethoxylierten Butindioldiacrylates mit einem Molekulargewicht von ca. 440 g/mol (18,4 mmol C=C), 300 ppm Hydrochinonmonomethylether, bezogen auf Diacrylateinwaage, und 16,2 g Toluol werden unter Rühren auf 120° C temperiert. Danach werden 56,2mg einer 1 Gew.-%igen (bezogen auf elementares Platin) toluolischen Lösung eines Tris(divinyltetramethyldisiloxan)diplatinkomplexes zugegeben und die Reaktionsmischung zwanzig Minuten bei 120° C gerührt. Nach der Filtration wird das Produkt fünfzehn Minuten bei 100° C im Hochvakuum (1 mbar) bis zur Gewichtskonstanz ausgeheizt. Man erhält 26,2 g (93,4% d.Th.) eines klaren, gelben Öles mit einer Viskosität von 67 mm²/s bei 25° C und einer Jodzahl von 33,3 g Jod pro 100 g Öl.
f) Polymer AC I:
   80 g eines α,ω-Dihydrogendimethylpolysiloxanes (Gehalt an Si-gebundenen Wasserstoff: 0.346 Gew.-%) mit einer Viskosität von 3.7 mm²/s bei 25°C und 488.5 g eines methylterminierten Polydimethylsiloxanes einer mittleren Kettenlänge von ca. 275 Siloxyeinheiten und einer Viskosität von 2000 mm²/s bei 25°C werden unter PNCl₂-Katalyse (40 ppm) bei 140°C unter Stickstoff und Rühren zwei Stunden equilibiert. Nach dem Abkühlen auf 70°C wird die Reaktionsmischung mit 5.7 g Magnesiumoxid versetzt und schließlich auf Raumtemperatur unter Rühren gebracht. Das Produkt wird nach der Filtration bei 120°C im Hochvakuum (1 mbar) über vierzig Minuten bis zur Gewichtskonstanz ausgeheizt. Man erhält 525 g (92.3 % d. Th.) eines klaren, farblosen Öles mit einer Viskosität von 71 mm²/s bei 25°C und einem Gehalt an Si-gebundenem Wasserstoff von 0.041 Gew.-% (VSIV). Das Polymer enthält durchschnittlich 84 Mol.-% Hydrogendimethylsiloxygruppen.
   20 g VSIV, 3.77 g eines ethoxylierten Butindioldiacrylates mit einem Molekulargewicht von ca. 440 g/mol (9.2 mmol C=C), 300 ppm Hydrochinonmonomethylether bezogen auf Diacrylateinwaage und 15 g Toluol werden unter Rühren auf 120°C temperiert. Danach werden 54.6 mg einer 1 Gew.-%igen (bezogen auf elementares Platin) toluolischen Lösung eines Tris(divinyltetramethyldisiloxan)diplatinkomplexes zugegeben und die Reaktionsmischung zwanzig Minuten bei 120°C gerührt. Nach der Filtration wird das Produkt fünfzehn Minuten bei 100°C im Hochvakuum (1 mbar) bis zur Gewichtskonstanz ausgeheizt. Man erhält 20.5 g (86 % d. Th.) eines klaren, gelben Öles mit einer Viskosität von 346 mm²/s bei 25°C und einer Jodzahl von 17.8 g Jod pro 100 g Öl (AC I).
g) Vergleichspolymer AC II:
   20 g eines α,ω-Dihydrogendimethylpolysiloxanes mit einem Gehalt an Si-gebundenen Wasserstoff von 0.049 Gew.-% (0.97 ·10⁻² mol SiH) und einer Viskosität von 67 mm²/s bei 25°C, 4.47 g eines ethoxylierten Butindioldiacrylates mit einem Molekulargewicht von ca. 440 g/mol (1.02·10⁻²mol C=C), 300 ppm Hydrochinonmonomethylether, bezogen auf Diacrylateinwaage, 17.9 g Toluol und 62.7 µl (20 ppm Platin, bezogen auf reines Metall) einer Lösung von Hexachloroplatinsäure in Isopropanol mit einem Platingehalt von 1 Gew.-% werden im Reaktionsgefäß unter Rühren auf 110°C temperiert. Nach 30 Minuten Reaktionszeit bei 110°C wird die Reaktionsmischung filtriert und im Hochvakuum bei 100°C bis zur Gewichtskonstanz eingeengt. Man erhält 20.3 g (83% d. Th.) eines klaren, gelben Öles mit einer Viskosität von 320 mm²/s bei 25°C und einer Jodzahl von 20.6 g Jod pro 100 g Öl (AC II).

### Beispiel 1 und Vergleichsversuch 1:

Polmer AC I und AC II, deren Herstellung oben unter f) bzw. g) beschrieben ist, werden jeweils mit 3 Gew.-% 2-Hydroxy-2-methyl-1-phenylpropan-1-on (Darocur 1173, Fa. Ciba Geigy) versetzt. Die fertigen Formulierungen werden mit einem Glasstab in einer Schichtdicke von ca. 3 µm auf die in Tabelle 1 genannten Substrate aufgebracht und in einer Stickstoffatmosphäre mit 20 ppm Restsauerstoff unter einer H-Lampe der 300er-Serie der Fa. Fusion drei Sekunden bei 30°C gehärtet. Zur Bestimmung des rub-off (Abrieb) werden die beschichteten Substrate mit Daumen und Zeigefinger gespannt. Unter kräftigem Druck wird sodann mit dem Finger der anderen Hand auf dem gestrafften Substrat mehrmals zügig hin und her gerieben. Haftet der Siliconfilm auf der Substratoberfläche schlecht, wird ein Teil des Siliconauftrages abgerieben. Der Abrieb wird entsprechend der Stärke mit den Noten 1-6 beurteilt, wobei eine vollkommen unverletzte Oberfläche mit der Note 1 bewertet wird.

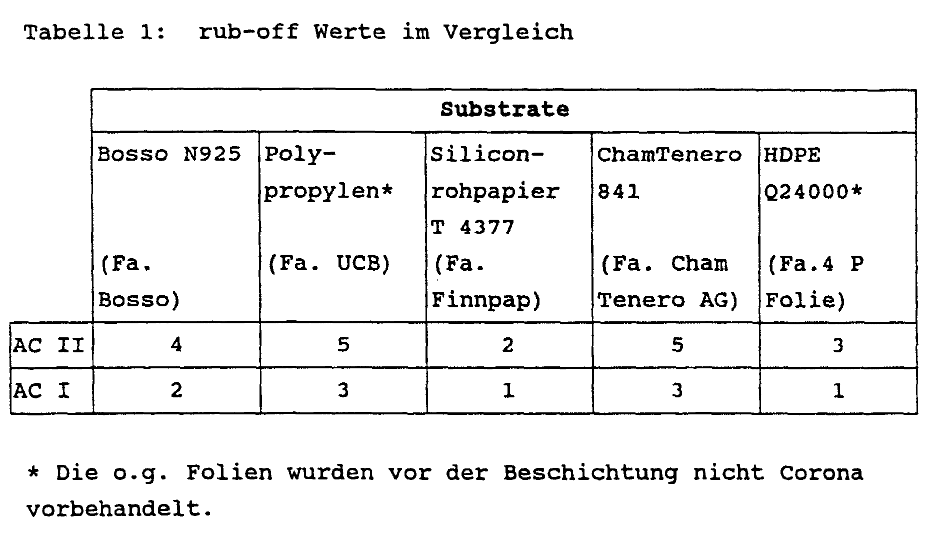

Wie die Tabelle 1 deutlich zeigt, weisen die erfindungsgemäßen, gehärteten Siliconfilme mit Polymer AC I auf allen Substraten eine bessere Haftung und Abriebfestigkeit auf.

## Patentansprüche

1. Strahlungshärtende Zusammensetzungen enthaltend
(A) (Meth)acryloxygruppen aufweisende lineare Organopolysiloxane der allgemeinen Formel
R¹ ₐR₃₋ₐSiO(R₂SiO)_{c}[R₂Si-Y-SiR₂O(R₂SiO)_{c}]_{d}SiR_{3-b}R¹ _{b} (I)
wobei R gleich oder verschieden sein kann, einen einwertigen, gegebenenfalls substituierten Kohlenwasserstoffrest mit 1 bis 18 Kohlenstoffatomen je Rest, der frei von endständigen aliphatischen Kohlenstoff-Kohlenstoff-Mehrfachbindungen ist, bedeutet,
R¹ ein Rest der Formel 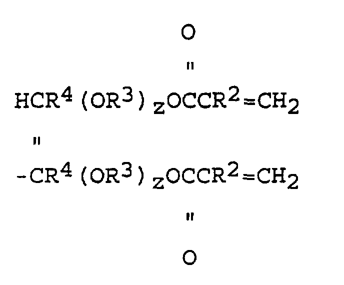 ist, wobei z eine ganze Zahl im Wert von 1 bis 10,
R² ein Wasserstoffatom oder einen Methylrest,
R³ einen linearen oder verzweigten Alkylenrest mit 1 bis 6 Kohlenstoffatom(en) je Rest und
R⁴ einen linearen oder verzweigten Alkylenrest mit 1 bis 6 Kohlenstoffatom(en) je Rest bedeutet,
Y einen zweiwertigen organischen Rest, der frei von endständigen aliphatischen Kohlenstoff-Kohlenstoff-Mehrfachbindungen ist, bedeutet,
a 0 oder 1 ist,
b 0 oder 1 ist,
mit der Maßgabe, daß die Summe a+b je Molekül 1 oder 2, durchschnittlich 1,3 bis 1,9 ist,
c eine ganze Zahl im Wert von 1 bis 1000 ist und
d 0 oder eine ganze Zahl im Wert von 1 bis 10 ist, und
(B) Photosensibilisatoren.

2. Strahlungshärtende Zusammensetzungen nach Anspruch 1, **dadurch gekennzeichnet, daß** R¹ ein Rest der Formel 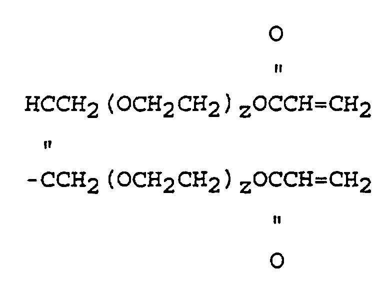 ist, wobei z eine ganze Zahl im Wert von 1 bis 10 ist.

3. Strahlungshärtende Zusammensetzungen nach Anspruch 1 oder 2, **dadurch gekennzeichnet, daß** d 0 ist.

4. Verfahren zur Herstellung von klebrige Stoffe abweisenden Überzügen durch Auftragen von vernetzbaren Zusammensetzungen enthaltend
(A) (Meth)acryloxygruppen aufweisende lineare Organopolysiloxane der allgemeinen Formel
R¹ ₐR₃₋ₐSiO(R₂SiO)_{c}[R₂Si-Y-SiR₂O(R₂SiO)_{c}]_{d}SiR_{3-b}R¹ _{b} (I)
wobei R, R¹, Y, a, b, c und d die im Anspruch 1 dafür angegebene Bedeutung haben,
mit der Maßgabe, daß die Summe a+b je Molekül 1 oder 2, durchschnittlich 1,3 bis 1,9 ist,
und
(B) Photosensibilisatoren
auf die klebrige Stoffe abweisend zu machenden Oberflächen und anschließende Härtung der vernetzbaren Zusammensetzung durch Bestrahlung.

5. (Meth)acryloxygruppen aufweisende lineare Organopolysiloxane der allgemeinen Formel
R¹ ₐR₃₋ₐSiO(R₂SiO)_{c}[R₂Si-Y-SiR₂O(R₂SiO)_{c}]_{d}SiR_{3-b}R¹ _{b} (I)
wobei R, R¹, Y, a, b, c und d die im Anspruch 1 dafür angegebene Bedeutung haben,
mit der Maßgabe, daß die Summe a+b je Molekül 1 oder 2, durchschnittlich 1,3 bis 1,9 ist.

## Claims

1. Radiation-curing compositions comprising
(A) linear organopolysiloxanes containing (meth)-acryloxy groups, of the general formula
R¹ ₐR₃₋ₐSiO(R₂SiO)_{c}[R₂Si-Y-SiR₂O(R₂SiO)_{c}]_{d}SiR_{3-b}R¹ _{b} (I)
in which R at each occurrence can be identical or different and is a monovalent, substituted or unsubstituted hydrocarbon radical having 1 to 18 carbon atoms per radical, which is free from terminal aliphatic carbon-carbon multiple bonds,
R¹ is a radical of the formula 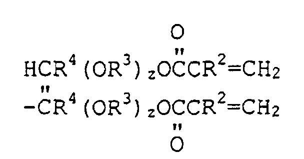 where z is an integer whose value is from 1 to 10,
R² is a hydrogen atom or a methyl radical,
R³ is a linear or branched alkylene radical having 1 to 6 carbon atom(s) per radical, and
R⁴ is a linear or branched alkylene radical having 1 to 6 carbon atom(s) per radical,
Y is a divalent organic radical which is free from terminal aliphatic carbon-carbon multiple bonds,
a is 0 or 1,
b is 0 or 1,
with the proviso that the sum a+b per molecule is 1 or 2, on average from 1.3 to 1.9,
c is an integer whose value is from 1 to 1000, and
d is 0 or an integer whose value is from 1 to 10, and
(B) photosensitizers.

2. Radiation-curing compositions according to Claim 1, **characterized in that** R¹ is a radical of the formula 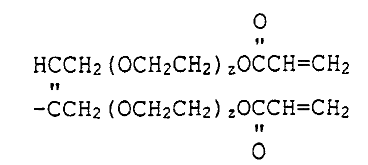 where z is an integer whose value is from 1 to 10.

3. Radiation-curing compositions according to Claim 1 or 2, **characterized in that** d is 0.

4. Process for preparing coatings which repel tacky substances by applying a crosslinkable composition comprising
(A) linear organopolysiloxanes containing (meth)-acryloxy groups, of the general formula
R¹ ₐR₃₋ₐSiO(R₂SiO)_{c}[R₂Si-Y-SiR₂O(R₂SiO)_{c}]_{d}SiR_{3-b}R¹ _{b} (I)
where R, R¹, Y, a, b, c and d are as defined in Claim 1,
with the proviso that the sum a+b per molecule is 1 or 2, on average from 1.3 to 1.9,
and
(B) photosensitizers
to the surfaces which are to be made repellent to tacky substances, and then curing the crosslinkable composition by irradiation.

5. Linear organopolysiloxanes containing (meth)-acryloxy groups, of the general formula
R¹ ₐR₃₋ₐSiO(R₂SiO)_{c}[R₂Si-Y-SiR₂O(R₂SiO)_{c}]_{d}SiR_{3-b}R¹ _{b} (I)
where R, R¹, Y, a, b, c and d are as defined in Claim 1, with the proviso that the sum a+b per molecule is 1 or 2, on average from 1.3 to 1.9.

## Revendications

1. Compositions durcissables par rayonnement comprenant
(A) des organopolysiloxanes linéaires renfermant des groupes (méth)acryloxy de formule générale
R¹ ₐR₃₋ₐSiO(R₂SiO)_{c}[R₂Si-Y-SiR₂O(R₂SiO)_{c}]_{d}SiR_{3-b}R¹ _{b} (I)
dans laquelle R peut être identique ou différent et représente un radical hydrocarboné monovalent éventuellement substitué ayant de 1 à 18 atomes de carbone par radical, qui est dépourvu de liaisons multiples carbone-carbone aliphatiques terminales,
R¹ représente un radical de formule 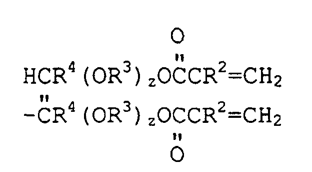 dans laquelle z représente un entier valant de 1 à 10,
R² représente un atome d'hydrogène ou un radical méthyle,
R³ représente un radical alkylène linéaire ou ramifié ayant de 1 à 6 atome(s) de carbone par radical, et
R⁴ représente un radical alkylène linéaire ou ramifié ayant de 1 à 6 atome(s) de carbone par radical,
Y représente un radical organique bivalent qui est dépourvu de liaisons multiples carbone-carbone aliphatiques terminales,
a vaut 0 ou 1,
b vaut 0 ou 1,
à condition que la somme a+b par molécule vaille 1 ou 2, en moyenne de 1,3 à 1,9,
c représente un entier valant de 1 à 1000, et
d vaut 0 ou représente un entier valant de 1 à 10, et
(B) des photosensibilisants.

2. Compositions durcissables par rayonnement selon la revendication 1, **caractérisées en ce que** R¹ représente un radical de formule 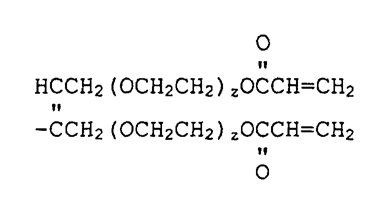 dans laquelle z représente un entier valant de 1 à 10.

3. Compositions durcissables par rayonnement selon la revendication 1 ou 2, **caractérisées en ce que** d vaut 0.

4. Procédé de préparation de revêtements repoussant les substances collantes par application de compositions réticulables comprenant
(A) des organopolysiloxanes linéaires renfermant des groupes (méth)acryloxy de formule générale
R¹ ₐR₃₋ₐSiO(R₂SiO)_{c}[R₂Si-Y-SiR₂O(R₂SiO)_{c}]_{d}SiR_{3-b}R¹ _{b} (I)
dans laquelle R, R¹, Y, a, b, c et d sont tels que définis à la revendication 1,
à condition que la somme a+b par molécule vaille 1 ou 2, en moyenne de 1,3 à 1,9,
et
(B) des photosensibilisants,
sur les surfaces devant être amenées à repousser les substances collantes, et par durcissement subséquent de la composition réticulable par irradiation.

5. Organopolysiloxanes linéaires renfermant des groupes (méth)acryloxy de formule générale
R¹ ₐR₃₋ₐSiO(R₂SiO)_{c}[R₂Si-Y-SiR₂O(R₂SiO)_{c}]_{d}SiR_{3-b}R¹ _{b} (I)
dans laquelle R, R¹, Y, a, b, c et d sont tels que définis à la revendication 1,
à condition que la somme a+b par molécule vaille 1 ou 2, en moyenne de 1,3 à 1,9.
